(19) Europäisches Patentamt / European Patent Office / Office européen des brevets

(11) **EP 2 119 095 B1**

(12) **FASCICULE DE BREVET EUROPEEN**

(45) Date de publication et mention
de la délivrance du brevet:
**22.02.2012 Bulletin 2012/08**

(21) Numéro de dépôt: **08708154.3**

(22) Date de dépôt: **24.01.2008**

(51) Int Cl.:
***H04L 9/30*** *(2006.01)*

(86) Numéro de dépôt international:
**PCT/EP2008/050815**

(87) Numéro de publication internationale:
**WO 2008/095784 (14.08.2008 Gazette 2008/33)**

(54) **PROCEDE DE CHIFFREMENT A L'AIDE DE CODES CORRECTEURS D'ERREURS**

VERSCHLÜSSELUNGSVERFAHREN MIT FEHLERKORREKTURCODES

CIPHERING METHOD USING ERROR CORRECTING CODES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.01.2007 FR 0700554**

(43) Date de publication de la demande:
**18.11.2009 Bulletin 2009/47**

(73) Titulaire: **THALES**
**92200 Neuilly-sur-Seine (FR)**

(72) Inventeurs:
• **TAVERNIER, Cédric**
**F-94120 Fontenay S/s Bois (FR)**
• **AIACHE, Hervé**
**F-93440 Dugny (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **ALABBADI M ET AL: "Integrated security and error control for communication networks using the McEliece cryptosystem" SECURITY TECHNOLOGY, 1992. CRIME COUNTERMEASURES, PROCEEDINGS. INSTITUTE OF ELECTRICAL AND ELECTRONICS ENGINEERS 1992 INTERNATIONAL CARNAHAN CONFERENCE ON ATLANTA, GA, USA 14-16 OCT. 1992, NEW YORK, NY, USA,IEEE, US, 14 octobre 1992 (1992-10-14), pages 172-178, XP010060284 ISBN: 0-7803-0568-X**
• **AMMAR B ET AL: "Reducible rank codes and their applications to cryptography" IEEE TRANSACTIONS ON INFORMATION THEORY, IEEE SERVICE CENTER, PISCATAWAY, NJ, US, vol. 49, no. 12, décembre 2003 (2003-12), pages 3289-3293, XP011104664 ISSN: 0018-9448**
• **JAMES L. MASSEY: "The Ubiquity of Reed-Muller Codes"[Online] 19 février 2004 (2004-02-19), pages 1-12, XP009089231 Melbourne, Australia ISSN: 1611-3349 Extrait de l'Internet: URL:http://www.springerlink.com/content/30 q8vvg507l9g6m1/> [extrait le 2007-09-07]**
• **ENGELBERT D. OVERBECK R. SCHMIDT A.: "A Summary of McEliece Cryptosystems and their Security" CRYPTOLOGY EPRINT, [Online] 10 mai 2006 (2006-05-10), pages 1-54, XP002449947 Darmstadt Extrait de l'Internet: URL:http://eprint.iacr.org/2006/162.ps> [extrait le 2007-09-06]**

EP 2 119 095 B1

**Description**

La présente invention concerne notamment un procédé de codage d'informations ou de données. Elle concerne, par exemple, la sécurité de transmission dans les réseaux. Elle s'applique, par exemple, dans les réseaux de transmission filaire et les réseaux sans fil.

Dans les réseaux sans fil, les contraintes sont élevées, il y a souvent une faible capacité de calcul, des problèmes de transmission (canaux bruités) et des flux faibles (weak flow). Un des problèmes rencontré est la protection de l'information transmise, c'est-à-dire trouver une solution qui permette, de respecter l'anonymat des utilisateurs souhaitant échanger des informations, de garantir la non-accessibilité de ces informations à des attaquants malveillants, tout en conservant une bonne qualité de trafic, c'est-à-dire sans trop ajouter de latence. Pratiquement, il est facile pour un attaquant d'intercepter toute communication dans une région donnée, lorsque l'on se trouve dans un environnement sans fil. Les systèmes habituels de chiffrement avec des clés publiques permettant de chiffrer l'adresse du noeud d'un réseau de communication sont en général très lents par rapport au besoin de l'application. Il est connu de l'art antérieur, plusieurs solutions qui utilisent des systèmes de chiffrement à clé privé. Ces solutions n'offrent toutefois pas une sécurité élevée, car chaque noeud du réseau doit connaître la clé privée des autres. Ainsi, lorsqu'un noeud est corrompu, la sécurité du réseau s'écroule.

Le document de William Luh, Deepa Kundur, "Distributed Privacy for Visual Sensor Networks via Markov Shares" In Proceedings of the Second IEEE Workshop on Dependability and Security in Sensor Networks and Systems, 2006 divulgue une méthode qui divise l'information avant de la transmettre. Cette solution protège l'information uniquement si on fait l'hypothèse que l'attaquant n'est capable d'intercepter qu'une faible fraction de l'information. Cette hypothèse est peu probable dans un contexte sans fil. Un autre inconvénient de la méthode décrite est qu'elle ne garantit pas l'anonymat des utilisateurs.

Le document de V. M. Sidel'nikov. "A public-key cryptosystem based on Reed-Muller codes » Discrete Mathematics and Applications, 4(3):191-207, 1994 décrit aussi un système de chiffrement à clé publique qui utilise la propriété des codes de Muller et conserve le principe d'ajouter une erreur aléatoire de poids fixée. La performance d'un tel algorithme est encore faible lorsque l'on considère des applications temps réel ou proches du temps réel. Cet article divulgue un algorithme qui est plus restrictif. La longueur de la clé est toujours importante et la complexité de chiffrement d'un message est encore importante si l'on souhaite conserver une sécurité élevée. Le système de chiffrement à clé publique décrit est probabiliste. Il existe donc une probabilité non nulle que le destinataire du message ne réussisse pas à déchiffrer le message.

Le document de Alabbadi intitulé « Integrated security and error control for communication networks using the McEliece cryptosystem » concerne un procédé de chiffrement à clé publique de McEliece modifié pour créer un système de contrôle et de sécurité pour les réseaux de communication.

Le document de Ammar « reducible rank codes and their applications to cryptography » décrit la possibilité de réduire la taille de la matrice de la clé de chiffrement.

Le document de James « the biquity of Reed-Muller Codes » concerne les codes de Reed-Muller et aussi de nouvelles classes de codes cycliques.

Le document de Engelbert « A summary of Mc Eliece Cryptosystems and their Security » traite les systèmes de chiffrement Mec Eliece et de leur sécurité.

A l'heure actuelle, les systèmes décrits dans l'art antérieur ne résolvent pas de façon suffisante les problèmes de sécurité lors de la transmission d'information dans un réseau de transmission et ils ne s'intéressent pas au problème de l'anonymat de l'émetteur et du récepteur.

Un des objets de l'invention concerne un procédé de codage d'une information circulant dans un réseau comprenant au moins un noeud émetteur de l'information, un noeud destinataire, utilisant un système de chiffrement à clé publique, caractérisé en ce qu'il comporte au moins les étapes suivantes :

- générer une clé publique en utilisant une matrice de génération de clé publique NG constituée de u colonnes et u lignes, un élément d'une colonne ou d'une ligne étant un bloc formé par la matrice G de génération de code, et en exécutant l'opération suivante : soit RI une matrice inversible aléatoire constituant une clé privée et RP une matrice obtenue par permutation aléatoire constituant une clé privée, la clé publique est donnée par la matrice PUK = RI (multiplication matricielle par bloc) NG(multiplication matricielle)RP,
- utiliser la clé privée et la clé publique obtenue pour coder et décoder les informations transmises dans le réseau, et en ce qu'il comporte
- une étape de réduction de la taille de la matrice NG de génération de la clé publique en éliminant certaines colonnes de la matrice, le nombre de colonnes effacées dans la matrice est le même dans tous les blocs constituant la matrice NG et en ce que le nombre de colonnes à effacer est déterminé à partir de l'algorithme de décodage utilisé à la réception de l'information.

La matrice RP est par exemple une matrice inversible RP construite de la manière suivante : on tire aléatoirement une matrice de permutation à laquelle on additionne une matrice de même dimension MA dont les vecteurs colonnes ne contiennent qu'un nombre de positions non nulles comprises entre le nombre 0 et un nombre donné Pv.

Le procédé selon l'invention, du fait notamment de la dimension de la matrice utilisée pour le chiffrement offre la possibilité d'avoir un nombre de paramètres plus important, non dépendant de la structure du code, contrairement aux techniques de codage connues de l'art antérieur. La complexité du déchiffrement dépend maintenant linéairement de la longueur du code construit, tandis que dans l'art antérieur celle-ci dépendait directement de la complexité de décodage/ Le procédé selon l'invention offre donc une complexité plus faible que celle résultant d'un décodage en longueur.

Le procédé selon l'invention peut être implémenté au niveau le plus bas, à savoir le signal porteur de l'information échangée entre la source et la destination puisque l'on a la possibilité d'utiliser une technique existante de décodage souple.

On a la possibilité de mettre de l'information dans l'erreur générée pour chiffrer afin d'augmenter le rendement selon le procédé de V. M. Sidel'nikov. "A public-key cryptosystem based on Reed-Muller codes » Discrete Mathematics and Applications, 4(3):191-207, ou bien de Nicolas Sendrier dans le cadre d'un Mémoire d'habilitation à diriger des recherches, spécialité informatique, Université Paris 6, mars 2002.

D'autres caractéristiques et avantages de la présente invention apparaîtront mieux à la lecture de la description donnée à titre illustratif et non limitatif qui suit annexée des figures qui représentent :

- La figure 1, la génération de la matrice de chiffrement,
- La figure 2, la génération de la clé publique et de la clé privée utilisées dans le procédé de chiffrement selon l'invention,
- La figure 3 un schéma permettant la réduction de la longueur de la clé publique générée,
- La figure 4, un exemple de schéma permettant d'ajouter une erreur,
- La figure 5, un exemple de structure de codage de l'information,
- La figure 6, un exemple de décodage de l'information,
- La figure 7, un exemple de communication entre un émetteur de l'information et un destinataire dans un réseau comportant plusieurs noeuds.

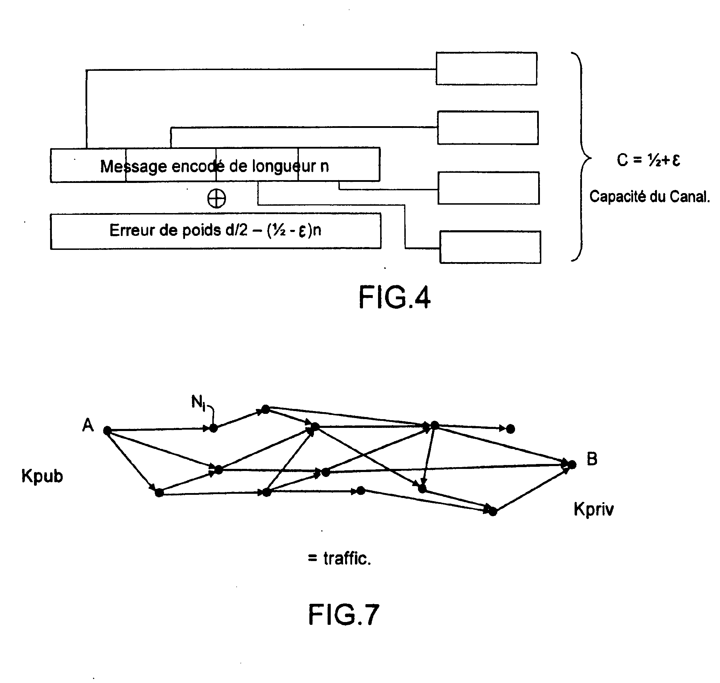

Afin de mieux faire comprendre le principe mis en oeuvre dans le procédé de chiffrement selon l'invention, l'exemple sera donné, à titre illustratif et nullement limitatif dans le cadre d'un réseau comportant plusieurs noeuds, dont un noeud émetteur A de l'information chiffrée, un noeud destinataire B ou récepteur de cette information et plusieurs noeuds intermédiaires Ni, comme il est représenté sur la figure 7. Le code utilisé pour cet exemple, sera le code de Reed-Muller. Toutefois, sans sortir du cadre de l'invention, les étapes décrites ci-après peuvent être appliquées à tout code habituellement utilisé pour le chiffrement de données.

Chacun des noeuds est équipé d'un dispositif d'émission réception connu de l'Homme du métier et qui ne sera donc pas détaillé dans la présente description. Chaque noeud comporte aussi un dispositif permettant d'exécuter les différences étapes du procédé selon l'invention, tel qu'un processeur adapté à chiffrer l'information à émettre et à déchiffrer une information chiffrée reçue par un noeud et l'adresse du noeud destinataire de l'information. Un noeud est notamment pourvu d'un générateur aléatoire permettant de générer les matrices inversibles et aléatoires utilisées dans les étapes du procédé.

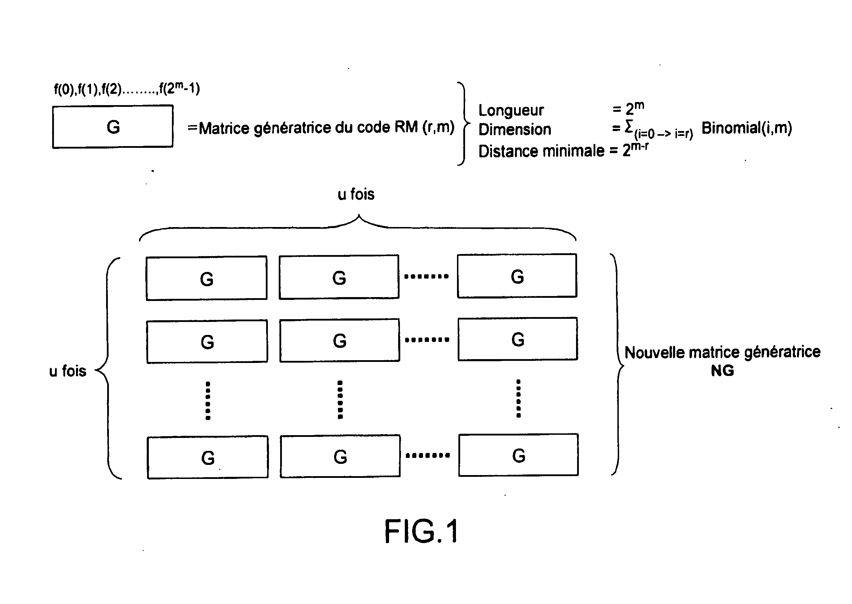

La figure 1 représente la matrice de génération NG utilisée pour le codage ou chiffrement de l'information à transmettre.

Soit C un code linéaire q-aire t-correcteur de longueur n, de dimension k, CWq(n, t) l'ensemble des mots de $F^n_q$ de poids de Hamming t. (Cryptosystèmes à clé publique basés sur les codes correcteurs d'erreurs de Nicolas Sendrier dans le cadre d'un Mémoire d'habilitation à diriger des recherches, spécialité informatique, Université Paris 6, mars 2002.)

G est une matrice génératrice de clé publique, x appartenant à $F^n_q$ le chiffrement est défini de la manière suivante :

$$y = xG + e \ ; \ w_H(e) = t$$

y est un vecteur, e correspond à une erreur de poids t qui sera choisie au moment du chiffrement, w correspond au poids de Hamming, l'indice H au mot Hamming et t à l'erreur.

La matrice de génération de code selon l'invention désignée NG est une matrice comprenant u lignes et u colonnes. Un élément de la matrice est constitué d'un bloc G correspondant à la matrice initiale de génération de clé publique. NG comprend donc u blocs G selon une ligne de la matrice et aussi u blocs G selon une colonne de la matrice.

La matrice du code G est une concaténation et un produit de codes connus de Reed-Muller, par exemple. Comme RM(r,m) a une dimension = k = $\Sigma_{(i=0 \to i=r)}$ binom(i,m) (avec bi-nom(i,m) = m !/(i !(m-i) !) et une longueur N = $2^m$, la clef publique sera de dimension (u*k)*(u*N).

Pour le déchiffrement, il faut faire u décodages d_i alors que les procédés connus de l'art antérieur n'en faisaient qu'un: (d_1 ,d_2,...,d_u).

L'intérêt de cette nouvelle technique réside dans les performances obtenues et dans le choix des paramètres. En effet comme cela le système selon l'invention est davantage paramétrable puisqu'il existe un grand choix de paramètres tandis qu'avec les procédés selon l'art antérieur, ces choix sont imposés par la structure du code. Par exemple, pour les codes de Goppa : longueur N = $2^m$, dimension k = $2^m$ -m-t, la complexité de l'algorithme de décodage dépend quadratiquement de la longueur du code, donc la complexité pour effectuer un décodage est plus faible que d'effectuer un décodage en longueur $2^{(m-\log\_2(u))}$.

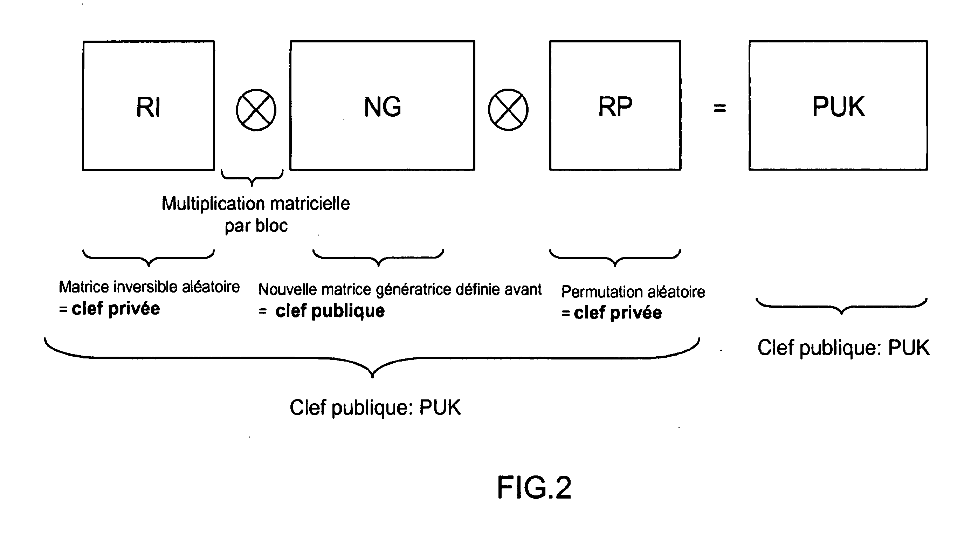

A partir de cette nouvelle matrice NG, le procédé construit des clés publiques et des clés privées qui vont être utilisées lors de la transmission du message, pour chiffrer et déchiffrer les messages à transmettre. La construction de ces clés est illustrée à la figure 2.

La clé publique PUK permettant de coder les informations transmises est construite en utilisant une matrice inversible aléatoire RI, la nouvelle matrice NG et une matrice inversible RP, construite par exemple de la manière suivante : on tire aléatoirement une matrice de permutation à laquelle on additionne une matrice de même dimension MA donc les vecteurs colonnes ne contiennent qu'un nombre borné de positions non nulles, entre 0 et un nombre donné Pv. Pv sera ajusté en fonction de la sécurité désiré. Si on note RPI, cette matrice ainsi construite, alors la matrice RP est obtenue en inversant la matrice RPI (RP = $\text{RPI}^{-1}$). Donc si la matrice MA est nulle, RP n'est en fait rien d'autre qu'une matrice de permutation.

La multiplication de RI avec NG est une multiplication par bloc. La multiplication à gauche du code concaténé par une matrice inversible est une multiplication par bloc permettant d'obtenir une matrice de rang uk. On a le schéma suivant :

RI (multiplication matricielle par bloc) NG (multiplication classique matricielle) RP = clé publique PUK utilisé dans le procédé pour déchiffrer l'information reçue par un noeud.

La clé privée PRK utilisée pour coder l'information à transmettre au niveau d'un noeud dans le procédé est composée de RI et de RP.

Dim(RI) = $u^2 \cdot (\Sigma_{(i=0 \to i=r)}$ Binomial(i,m)$)^2$ ; où Binomial(i, m) est une fonction définie de la manière suivante (m! /(i !(m-i) !)) avec m le nombre de variables pour le code de Reed-muller, r l'ordre du code de Reed-Muller RM(r,m). Dim(RP) = $u^2 \cdot (2^m)^2$ ;

$$\text{Dim(NG)} = \text{Dim(PUK)} = (u\ \Sigma_{(l=0\ \to\ i=r)}\ \text{Binomial(i,m)}).(u2^m).$$

Tout autre type de code peut être utilisé.

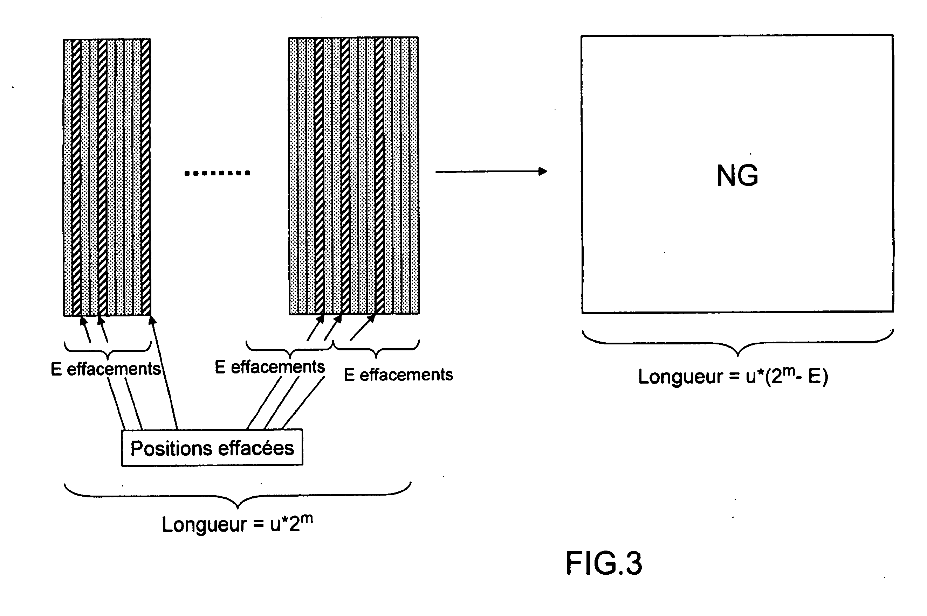

Selon une variante de réalisation, le procédé comporte une étape illustrée à la figure 3 permettant de réduire la longueur de la clé publique générée en figure 2.

Elle consiste à éliminer certaines colonnes de la matrice. Le nombre de colonnes effacées est déterminé, par exemple, en fonction de l'algorithme de décodage utilisé à la réception de l'information transmise. Par exemple, pour un algorithme de décodage tolérant t erreurs maximum, on a t = a erreurs construites + 2(effacements E) de colonnes.

La valeur du nombre d'effacements de colonnes e est déterminée à partir de t et de la sécurité de la transmission souhaitée.

Il est ainsi possible d'envisager un même nombre d'effacements pour tous les blocs de la matrice NG. -

Selon un mode de réalisation, le procédé peut ajouter une erreur selon un schéma représenté à la figure 4.

Pour cela, le procédé évalue de façon dynamique (selon un algorithme connu de l'Homme du métier) la capacité du canal (décodage adaptatif), puis en fonction de la qualité du canal, le procédé additionne des erreurs aléatoires de poids fixé afin de fixer la sécurité, d'un point de vue de la reconstruction de l'information.

Le poids de cette erreur dépend également de la matrice RP. Cette dépendance s'exprime en fonction du poids moyen des colonnes de la matrice RP. Plus ce poids moyen sera élevé, plus cette dépendance sera forte sera forte. Par exemple si le poids de l'erreur toléré pour une matrice RP de permutation est n*Wa et si le poids moyen de chaque colonne de $\text{RP}^{-1}$ est de deux, alors le poids de l'erreur ne pourra pas excéder $\frac{1}{2}(1-\sqrt{(2Wa-1)})*n$.

Sur la figure 4, l'exemple est donné dans le cas d'un code de Reed-Muller. Toutes les opérations sont matricielles, la complexité est directement proportionnelle à la quantité $u^2 \cdot (2^m-E)(\Sigma_{(i=0 \to i=r)}$ Binomial(i,m)).

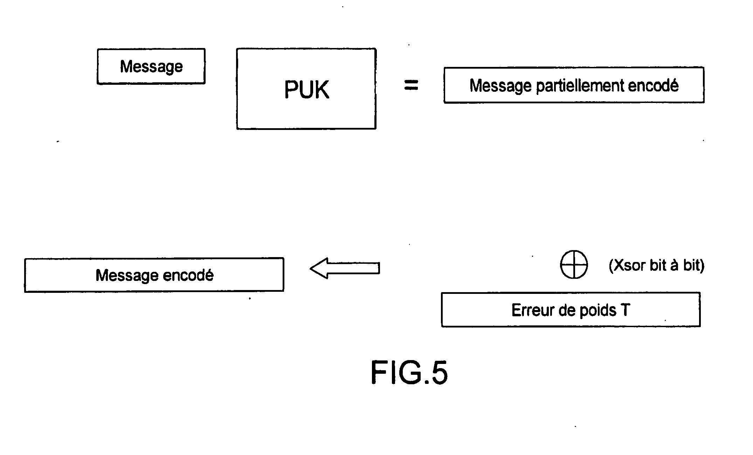

La figure 5 représente un exemple de codage ou chiffrement de l'information à transmettre en utilisant la clé générée en figure 1. Le message est codé en utilisant la clé publique PUK, puis on ajoute une erreur aléatoire de poids fixé, selon le schéma de la figure 4, par exemple.

Pour optimiser la sécurité de la transmission des informations, le procédé ajoute, par exemple, un trafic supplémentaire non utile ou en anglo-saxon « dummy trafic» avant de chiffrer l'information. Un noeud du réseau génère du flux trafic en fonction de la place dans la bande passante.

Selon un mode de réalisation, une partie de l'information non codée, par exemple, peut être mise dans l'erreur ajoutée comme décrit dans : « Cryptosystèmes à clé publique basés sur les codes correcteurs d'erreurs », Nicolas Sendrier, Mémoire d'habilitation à diriger des recherches, spécialité informatique. Université Paris 6, mars 2002. Cette technique figure aussi dans le document de V. M. Sidel'nikov, « A public-key cryptosystem based on Reed-Muller codes », Discrète Mathematics and Applications, 4(3) :191-207.

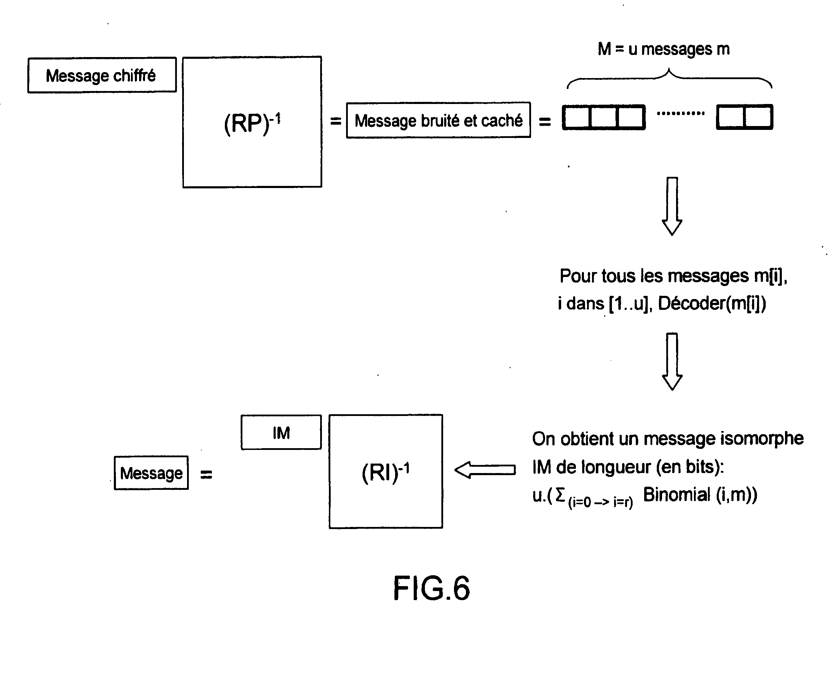

La figure 6 représente un schéma de décodage de l'information chiffrée selon l'invention.

Le message codé est décodé dans un premier temps par la clé privée en utilisant la matrice inverse de RP, on a u messages m, puis le procédé utilise u fois l'algorithme de décodage, pour tous les messages m[i] où i est un indice variant de 1 à u (u étant la taille de la matrice), décoder (m[i]).

Pour les positions effacées, le procédé exécute les étapes suivantes :

Si I est une position effacée, faire M[i]=0 sinon, faire M[i] = (-1)$^{Tab[t]}$; t := t+1; avec Tab[t] qui correspond au vecteur y défini précédemment, t est par exemple la position d'un bit dans un message à chiffrer.

De manière plus générale, t correspond à la position d'une composante du vecteur y

t=t+1 ; la boucle est exécutée pour i compris dans $[0.....u2^m-1]$ où m est le paramètre du code de Reed-Muller, $2^m$ est la longueur du code de Reed-Muller.

Le message obtenu est isomorphe IM de longueur (en bits) :

$u.(\Sigma_{(i=0 \to i=r)}$ Binomial(i,m)).

Le procédé applique ensuite la clé privée RI, en utilisant sa matrice inverse $(RI)^{-1}$ pour obtenir le message final décodé.

Pour le code de Reed Muller d'ordre 2 : RM(2,m), il est bien connu que les erreurs de poids W sont corrigibles avec une probabilité élevée si $W < 2^{m-1}(1-sqrt(log(4)(1+m+m(m-1)/2))/2^m))$. De plus, la difficulté de corriger une erreur est équivalente à la difficulté de corriger 2 effacements.

Pour **m** = 9, il est possible de corriger environ 150 erreurs si l'on souhaite un simple et bon candidat qui est le mot de code le plus proche du mot de code bruité reçu.

En utilisant les paramètres précités, il est possible de corriger 155 erreurs, Les attaques existantes sur le système de chiffrement McEliece ne sont pas applicables pour les paramètres. En utilisant les paramètres suivants m = 9, **u** = 4, **E** = 200 et un nombre total d'erreur égal à 220.

Le procédé selon l'invention fait appel à des techniques connues de l'Homme du métier pour transmettre les clés publiques et privées générées.

La figure 7 schématise un exemple de mise en oeuvre du procédé selon l'invention dans le cas de deux utilisateurs dans un réseau Alice and Bob souhaitant communiquer, où le réseau comprend plusieurs noeuds intermédiaires. Alice A veut transmettre un message m à Bob B. Alice a besoin de trouver des chemins différents pour transmettre l'information, elle code le message en utilisant la clé publique PUK générée selon le principe décrit ci-avant en relation aux figures 2 et 3. Elle code aussi l'adresse du noeud de la destination finale **B.** Elle transmet ensuite le message codé.

Chaque noeud qui appartient au chemin entre la source **A** et la destination **B** doit déchiffrer l'adresse de **B** avec sa clé privée PRK et chiffrer l'adresse avec la clé publique du noeud suivant, ensuite l'information peut être transmise à ce noeud suivant.

Lorsque Bob reçoit un message, il décode avec sa clé privée l'information de contrôle et l'adresse du noeud, lorsqu'il recevra tous les paquets du message unitaire, **m,** il le décodera en mettant en oeuvre un algorithme connu de l'Homme du métier, par exemple, celui décrit dans le document de I. Dumer, G. Kabatiansky et C. Tavernier, "List decoding of Reed-Muller codes up to the Johnson bound with almost linear complexity", in Proc.ISIT 2006, Seattle,USA.

Cet algorithme assurera un décodage déterministe. L'Homme du métier pourra également utiliser un algorithme probabiliste qui corrige davantage d'erreurs, tel que celui décrit dans le document I. Dumer, "Recursive decoding and its performance for low-rate Reed-Muller codes", IEEE Trans. Inform. Theory, vol. 50, pp. 811-823, 2004.

Sans sortir du cadre de l'invention, le procédé selon l'invention peut être utilisé dans tout système de transmission sans fil qui demande un niveau de sécurité dans la transmission. Tout système de communication demandant des contraintes de sécurité élevées peut l'implémenter.

Tout système demandant la sécurisation d'information peut mettre en oeuvre le procédé selon l'invention.

Le procédé de codage d'information selon l'invention est particulièrement rapide.

Il peut être utilisé dans le domaine bancaire pour transmettre des informations ou pour échanger des informations que l'on souhaite protéger entre plusieurs utilisateurs dans un réseau.

## Revendications

**1.** Procédé de codage d'une information circulant dans un réseau comprenant au moins un noeud émetteur de l'information, un noeud destinataire, utilisant un système de chiffrement à clé publique comportant au moins les étapes suivantes :

• générer une clé publique en utilisant une matrice de génération de clé publique NG constituée de u colonnes et u lignes, un élément d'une colonne ou d'une ligne étant un bloc formé par la matrice G de génération de code, et en exécutant l'opération suivante :soit RI une matrice inversible aléatoire constituant une clé privée et RP une matrice obtenue à partir d'une matrice de permutation aléatoire constituant une clé privée, la clé publique est donnée par la matrice PUK, la matrice PUK étant égale au résultat de la multiplication matricielle par RP du résultat de la multiplication matricielle par bloc de RI par NG,
• utiliser la clé privée et la clé publique obtenue pour coder et décoder les informations transmises dans le réseau, et en ce qu il comporte
• une étape de réduction de la taille de la matrice NG de génération de la clé publique en éliminant certaines colonnes de la matrice, le nombre de colonnes effacées dans la matrice est le même dans tous les blocs constituant la matrice NG et en ce que le nombre de colonnes à effacer est déterminé à partir de l'algorithme de décodage utilisé à la réception de l'information.

**2.** Procédé selon la revendication 1 **caractérisé en ce que** la matrice RP est une matrice inversible RP, construite de la manière suivante : on tire aléatoirement une matrice de permutation à laquelle on additionne une matrice de même dimension MA donc les vecteurs colonnes ne contiennent qu'un nombre borné de positions non nulles, entre 0 et un nombre donné Pv

**3.** Procédé selon la revendication 1, **caractérisé en ce que** l'information circulant dans un canal de transmission évalue la capacité du canal de transmission, puis en fonction de la qualité de ce canal, on ajoute une erreur aléatoire de poids fixé.

**4.** Procédé de codage selon la revendication 3, **caractérisé en ce qu'**une partie de l'information à chiffrer est incorporée dans l'erreur ajoutée avant l'étape de codage.

**5.** Procédé selon la revendication 1, **caractérisé en ce que** l'on utilise un code de Reed-Muller.

**6.** Procédé selon l'une des revendications précédentes, **caractérisé en ce qu'**il comporte une étape de décodage de l'information codée mettant en oeuvre les étapes suivantes :

Le message codé est décodé dans un premier temps par la clé privée en utilisant la matrice inverse de RP, puis on utilise u fois l'algorithme de décodage pour les u messages m,
pour tous les messages m[i] où i est un indice variant de 1 à u, décoder $_l$m[1]1
Pour les positions effacées, exécuter les étapes suivantes :

Si i est une position effacée, faire M[i]=0
sinon, faire M[i] =-1$^{Tab[t]}$ ; t := t+1;
t=t+1 ; la boucle est exécutée pour i compris dans l'intervalle [0 ..... u2$^m$-1] où m est le paramètre du code de Reed-Muller, 2$^m$ est la longueur du code de Reed-Muller, et
on applique ensuite la clé privée RI, en utilisant sa matrice inverse RI$^{-1}$ pour obtenir le message final décodé.

## Claims

**1.** A method for encoding an item of information circulating in a network comprising at least one information emitting node and one destination node, using a public key cryptography system comprising at least the following steps:

- generating a public key using a matrix NG for generating a public key, said matrix being constituted by u columns and u rows, an element of a column or of a row being a block formed by the code generating matrix G, and by performing the following operation: given RI is a random reversible matrix constituting a private key and RP is a matrix obtained on the basis of a random permutation matrix constituting a private key, the public key is provided by the matrix PUK, the matrix PUK being equal to the result of the matrix multiplication by RP of the result of the block matrix multiplication of NG RI

- using the obtained private key and public key to encode and decode the information transmitted in the network, and **characterised in that** it comprises:

- a step of reducing the size of the matrix NG for generating the public key by eliminating certain columns from the matrix, with the number of columns deleted in the matrix being the same in all of the blocks that constitute the matrix NG and **in that** the number of columns to be deleted is determined on the basis of the decoding algorithm used on receipt of the information.

**2.** The method according to claim 1, **characterised in that** the matrix RP is a reversible matrix RP that is generated as follows: by randomly drawing a permutation matrix to which is added a matrix of the same size MA, thus the column vectors only contain a limited number of non-zero positions between 0 and a given number Pv.

**3.** The method according to claim 1, **characterised in that** the information circulating in a transmission channel evaluates the capacity of the transmission channel and, depending on the quality of this channel, a fixed weight random error is added.

**4.** The encoding method according to claim 3, **characterised in that** a part of the information to be encrypted is incorporated in the error that is added before the encoding step.

**5.** The method according to claim 1, **characterised in that** a Reed-Muller code is used.

**6.** The method according to any one of the preceding claims, **characterised in that** it comprises a step of decoding the encoded information that implements the following steps:

- in the first instance, decoding the encoded message via the private key using the reverse matrix of RP, then using the decoding algorithm u times for the u messages m,
- decoding m[i] for all of the m[i] messages, where i is an index that varies from 1 to u,
- performing the following steps for the deleted positions:
- setting M[i] = 0, if i is a deleted position, otherwise setting M[i] = $(-1)^{Tab[t]}$;
t=t+1;
t = t + 1; the circuit is completed for i within the interval [0.....u2$^m$-1] where m is the parameter of the Reed-Muller code, 2$^m$is the length of the Reed-Muller code, and the private key RI is subsequently applied using its reverse matrix RI$^{-1}$ to obtain the final decoded message.

**Patentansprüche**

**1.** Verfahren zum Codieren einer Information, die in einem Netzwerk mit wenigstens einem Informationssendeknoten und einem Zielknoten umläuft, unter Verwendung eines Public-Key-Verschlüsselungssystems, das wenigstens die folgenden Schritte beinhaltet:

Erzeugen eines Public Key unter Verwendung einer von u Spalten und u Reihen gebildeten Public-Key-Erzeugungsmatrix NG, wobei ein Element einer Spalte oder einer Reihe ein Block ist, der von der Code-Erzeugungsmatrix G gebildet wird, und unter Ausführung der folgenden Operation: wenn RI eine zufällige umkehrbare Matrix ist, die einen Private Key bildet, und RP eine Matrix ist, die auf der Basis einer einen Private Key bildenden zufälligen Permutationsmatrix ist, dann wird der Public-Key durch die Matrix PUK gegeben, wobei die Matrix PUK gleich dem Ergebnis der Matrixmultiplikation mit RP des Ergebnisses der Blockmatrixmultiplikation von NG Rlist,

- Verwenden des erhaltenen Private-Key und Public-Key zum Codieren und Decodieren der in dem Netzwerk übertragenen Informationen, und **dadurch gekennzeichnet, dass** es Folgendes beinhaltet:
- einen Schritt des Reduzierens der Größe der Public-Key-Erzeugungsmatrix NG durch Eliminieren bestimmter Spalten aus der Matrix, wobei die Zahl der in der Matrix gelöschten Spalten in allen die Matrix NG bildenden Blöcken gleich ist, und dadurch, dass die Zahl der zu löschenden Spalten anhand des beim Empfang der Information verwendeten Decodierungsalgorithmus ermittelt wird.

**2.** Verfahren nach Anspruch 1, **dadurch gekennzeichnet, dass** die Matrix RP eine umkehrbare Matrix RP ist, die wie folgt konstruiert wird: zufälliges Auslosen einer Permutationsmatrix, zu der eine Matrix derselben Größe MA addiert wird, so dass die Spaltenvektoren nur eine begrenzte Anzahl von Nicht-Null-Positionen zwischen 0 und einer gegebenen Zahl Pv enthalten.

3. Verfahren nach Anspruch 1, **dadurch gekennzeichnet, dass** die in einem Sendekanal umlaufende Information die Kapazität des Sendekanals beurteilt und dass je nach der Qualität dieses Kanals ein Zufallsfehler mit fester Gewichtung addiert wird.

4. Codierverfahren nach Anspruch 3, **dadurch gekennzeichnet, dass** ein Teil der zu verschlüsselnden Information vor dem Codierschritt in den addierten Fehler inkorporiert wird.

5. Verfahren nach Anspruch 1, **dadurch gekennzeichnet, dass** ein Reed-Muller-Code verwendet wird.

6. Verfahren nach einem der vorherigen Ansprüche, **dadurch gekennzeichnet, dass** es einen Schritt des Decodierens der codierten Information beinhaltet, der die folgenden Schritte implementiert:

- zunächst Decodieren der codierten Nachricht mit dem Private Key unter Verwendung der Umkehrmatrix RP, dann u-maliges Verwenden des Decodieralgorithmus für die u Nachrichten m,
- Decodieren von m[i] für alle m[i] Nachrichten, wobei i ein Index ist, der von 1 bis u variiert,
- Ausführen der folgenden Schritte für die gelöschten Positionen:
- Setzen von M[i] = 0, wenn i eine gelöschte Position ist, ansonsten Setzen von M[i] = -1$^{Tab[t]}$; t=t+1;
t = t + 1; die Schleife wird für i im Intervall [0.....u2$^m$-1] vervollständigt, wobei m der Parameter des Reed-Muller-Codes ist, 2$^m$ die Länge des Reed-Muller-Codes ist, und
nachfolgend Anwenden des Private Key RI unter Verwendung seiner Umkehrmatrix RI$^{-1}$, um die endgültige decodierte Nachricht zu erhalten.

$f(0),f(1),f(2)........,f(2^m-1)$

| G |

=Matrice génératrice du code RM (r,m)

Longueur $= 2^m$
Dimension $= \Sigma_{(i=0 \to i=r)}$ Binomial(i,m)
Distance minimale $= 2^{m-r}$

u fois

| G | | G | ....... | G |

| G | | G | ....... | G |

u fois

| G | | G | ....... | G |

Nouvelle matrice génératrice
**NG**

FIG.1

RI $\otimes$ NG $\otimes$ RP = PUK

Multiplication matricielle par bloc

Matrice inversible aléatoire
**= clef privée**

Nouvelle matrice génératrice définie avant
**= clef publique**

Permutation aléatoire
**= clef privée**

Clef publique: PUK

Clef publique: PUK

FIG.2

E effacements     E effacements    E effacements

Positions effacées

$Longueur = u*2^m$

$Longueur = u*(2^m - E)$

NG

FIG.3

EP 2 119 095 B1

C = ½+ε

Capacité du Canal.

Message encodé de longueur n

⊕

Erreur de poids d/2 − (½ - ε)n

FIG.4

B

Kpriv

A

N_i

Kpub

= traffic.

FIG.7

EP 2 119 095 B1

| Message | | PUK | | = | Message partiellement encodé |

| Message encodé | ⬅ | ⊕ (Xsor bit à bit) |
| | | Erreur de poids T |

## FIG.5

EP 2 119 095 B1

Message chiffré

$(RP)^{-1}$ = Message bruité et caché =

M = u messages m

Pour tous les messages m[i],
i dans [1..u], Décoder(m[i])

On obtient un message isomorphe
IM de longueur (en bits):
$u.(\Sigma_{(i=0 \to i=r)}$ Binomial (i,m))

IM

$(RI)^{-1}$

Message =

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WILLIAM LUH ; DEEPA KUNDUR.** Distributed Privacy for Visual Sensor Networks via Markov Shares. *Proceedings of the Second IEEE Workshop on Dependability and Security in Sensor Networks and Systems,* 2006
- **V. M. SIDEL'NIKOV.** A public-key cryptosystem based on Reed-Muller codes. *Discrete Mathematics and Applications,* 1994, vol. 4 (3), 191-207
- **V. M. SIDEL'NIKOV.** A public-key cryptosystem based on Reed-Muller codes. *Discrete Mathematics and Applications,* vol. 4 (3), 191-207
- **V. M. SIDEL'NIKOV.** A public-key cryptosystem based on Reed-Muller codes. *Discrète Mathematics and Applications,* vol. 4 (3), 191-207
- **I. DUMER ; G. KABATIANSKY ; C. TAVERNIER.** List decoding of Reed-Muller codes up to the Johnson bound with almost linear complexity. *Proc.ISIT 2006,* 2006
- **I. DUMER.** Recursive decoding and its performance for low-rate Reed-Muller codes. *IEEE Trans. Inform. Theory,* 2004, vol. 50, 811-823